# EUROPÄISCHE PATENTANMELDUNG

(11) **EP 3 299 654 A1**
(43) Veröffentlichungstag der Anmeldung: **28.03.2018**
(21) Anmeldenummer: 17183903.8
(22) Anmeldetag: 31.07.2017
(51) Int. Cl.: F16D 48/02, F16D 48/06

(54) **BETÄTIGUNGSANORDNUNG, VERFAHREN ZUM BETRIEB EINER BETÄTIGUNGSANORDNUNG SOWIE KRAFTFAHRZEUG**

(30) Priorität: 02.09.2016 DE 102016216626
(71) Anmelder: ZF Friedrichshafen AG, 88046 Friedrichshafen (DE)
(72) Erfinder: Buhl, Jörg, 97453 Schonungen (DE); Mäder, Fred, 97532 Üchtelhausen (DE)

(57) **Zusammenfassung**

Die Erfindung betrifft eine Betätigungsanordnung für eine Kraftfahrzeugkupplung mit einer Steuerungseinrichtung, einem Kupplungsaktuator und einem hydraulischen Streckenabschnitt, wobei der Kupplungsaktuator zum Betätigen der Kupplung auf die hydraulische Strecke wirkt, dadurch gekennzeichnet, dass der hydraulische Streckenabschnitt mit wenigstens einem hydraulischen Speicher verbunden ist.

Daneben betrifft die Erfindung ein Verfahren zum Betrieb einer Betätigungsanordnung.

Daneben betrifft die Erfindung ein Kraftfahrzeug.

## Beschreibung

Die Erfindung betrifft eine Betätigungsanordnung für eine Kraftfahrzeugkupplung mit einer Steuerungseinrichtung, einem Kupplungsaktuator und einem hydraulischen Streckenabschnitt, wobei der Kupplungsaktuator zum Betätigen der Kupplung auf die hydraulische Strecke wirkt.

Kupplungsaktuatoren, die auf einen hydraulischen Streckenabschnitt wirken, werden auch elektrohydraulische Kupplungsaktuatoren genannt, da sie üblicherweise mit einem Geberzylinder zusammenwirken oder sogar einen Geberzylinder aufweisen. Als elektromechanische Kupplungsaktuatoren werden dagegen Kupplungsaktuatoren bezeichnet, bei denen im Kraftübertragungsweg zur Kupplung keinerlei hydraulischer Streckenabschnitt auftaucht.

Kupplungsaktuatoren sind üblicherweise aufwendige Spezialkonstruktionen, bei denen nicht nur die Kraft zum Betätigen der Kupplung bereitgestellt wird, sondern die für die Betätigung einer Kupplung optimiert sind. Dies erkennt man beispielsweise daran, dass die Konstruktion üblicherweise dahingehend optimiert ist, dass der Kraftaufwand zum Ausrücken oder Einrücken der Kupplung minimiert ist.

Ausgehend hiervon ist es Aufgabe der Erfindung, eine Betätigungsanordnung anzugeben, bei der vereinfacht aufgebaute Kupplungsaktuatoren verwendet werden können.

Zur Lösung dieser Aufgabe ist vorgesehen, dass der hydraulische Streckenabschnitt mit wenigstens einem hydraulischen Speicher verbunden ist.

Das einzige Merkmal bei einem Kupplungsaktuator, das zwingend ist, ist das Vorhandensein eines Elektromotors. Wie dieser im Detail aussieht ist dabei nicht wesentlich, auch auf die Ausgestaltung der folgenden Bauteile hat dies keinen Einfluss.

Beispielsweise kann der Elektromotor eine Pumpe antreiben, die mit dem hydraulischen Streckenabschnitt verbunden ist. Alternativ kann der Elektromotor über ein Getriebe mit dem hydraulischen Streckenabschnitt verbunden sein, wobei oft das Getriebe das vom Elektromotor abgegebene Drehmoment auf einen Geberzylinder überträgt.

Als Kern der Erfindung wird angesehen, dass ein Teil der Aufgaben des Kupplungsaktuators auf den hydraulischen Streckenabschnitt übertragen wird, sodass der Kupplungsaktuator vereinfacht aufgebaut sein kann. Dabei werden genau diejenigen Aufgaben übertragen, die notwendig sind, damit der Kupplungsaktuator ein möglichst einfaches Getriebe ohne Zusatzfunktionen aufweisen kann.

Eine der Funktionen, die durch spezialisierte Kupplungsaktuatoren bereitgestellt wird, ist die Bereitstellung eines definierten Zustands im Fehlerfall. Fällt der Elektromotor aus, darf die Kupplung nicht geschlossen bleiben. Daher weisen die spezialisierten Kupplungsaktuatoren Kompensationsfedern auf, die irgendwo im Getriebe angreifen und für ein Ausrücken der Kupplung im Fehlerfall sorgen. Bei Elektromotoren bzw. Aktuatoren, die nicht speziell für den Einsatz in Kupplungen konstruiert sind, finden sich derartige Kompensationsfedern nicht.

Die Aufgabe der Kompensationsfedern im Fehlerfall wird dann durch den hydraulischen Speicher übernommen. Der hydraulische Speicher sorgt also dafür, dass der Kupplungsaktuator vereinfacht aufgebaut sein kann.

Vorteilhafterweise kann der hydraulische Speicher einen höheren Druck aufweisen als der hydraulische Streckenabschnitt. Der Druck des hydraulischen Speichers ist so zu wählen, dass bei Wirkverbindung des hydraulischen Speichers mit dem hydraulischen Streckenabschnitt die Kupplung ausgerückt wird. Bei "normally closed"-Kupplungen müssen die Kupplungen ausgerückt werden, damit sie offen sind. In diesem Fall ist der höhere Druck zu wählen.

Alternativ kann der hydraulische Speicher einen niedrigeren Druck aufweisen als der hydraulische Streckenabschnitt. Dies ist vorteilhafterweise in Verbindung mit einer "normally open"-Kupplung der Fall. Bei "normally open"-Kupplungen kann die Kupplung durch einen bereits vorhandenen Druck im hydraulischen Streckenabschnitt geschlossen sein. Durch das Öffnen und Auslassen des Hydraulikfluids aus dem hydraulischen Streckenabschnitt wird dann die Kupplung geöffnet.

Das Hydraulikfluid, das sich im hydraulischen Streckenabschnitt befindet, ist bevorzugt Hydrauliköl.

Weiterhin alternativ können zwei hydraulische Speicher vorhanden sein, wobei einer einen niedrigeren Druck und der zweite hydraulische Speicher einen höheren Druck aufweist als der hydraulische Streckenabschnitt. Dann kann sowohl ein definiertes Öffnen als auch ein definiertes Schließen der Kupplung stattfinden und zwar unabhängig davon, ob die Kupplung als "normally open"-Kupplung oder "normally closed"-Kupplung ausgebildet ist.

Dabei ist die Kupplung entweder als gezogene oder gedrückte Kupplung ausgeführt.

Bevorzugt kann der wenigstens eine hydraulische Speicher über ein Ventil an den hydraulischen Streckenabschnitt angebunden sein. Wie beschrieben soll der hydraulische Speicher nicht dauerhaft auf den hydraulischen Streckenabschnitt wirken, sondern nur im Fehlerfall. Hierfür ist das Ventil vorgesehen, sodass der Speicher nur im Bedarfsfall an den hydraulischen Streckenabschnitt anbindbar ist.

Bevorzugt kann das Ventil in einem ersten Betriebszustand den hydraulischen Speicher vom hydraulischen Streckenabschnitt trennen und in einem zweiten Betriebszustand den Geberzylinder. Im ersten Betriebszustand sind dann der Geberzylinder und der Nehmerzylinder miteinander verbunden und im zweiten Betriebszustand wirkt der Speicher auf den Nehmerzylinder.

Vorteilhafterweise kann die hydraulische Strecke einen Geberzylinder und einen Nehmerzylinder aufweisen der wenigstens eine hydraulische Speicher zwischen Geberzylinder und Nehmerzylinder an den hydraulischen Streckenabschnitt angebunden sein. Bei dieser Anbindungsposition ist die Anbindung besonders einfach.

Bevorzugt kann Kupplungsaktuator einen Spindeltrieb umfassen. Wie beschrieben soll die Betätigungsanordnung einen möglichst einfach aufgebauten Kupplungsaktuator aufweisen können. Bei Verwendung eines Spindeltriebs ist insbesondere die Verwendung von Standardaktuatoren, die in anderen Anwendungen als in einem Kraftfahrzeug eingesetzt werden, möglich.

Daneben betrifft die Erfindung ein Verfahren zum Betrieb einer Betätigungsanordnung wie beschrieben. Das Verfahren zeichnet sich dadurch aus, dass die hydraulische Strecke bei Vorliegen eines undefinierten Zustands des Kupplungsaktuators mit einem hydraulischen Speicher verbunden wird. Der undefinierte Zustand betrifft dabei insbesondere den Elektromotor des Kupplungsaktuators, es können aber auch andere Bauteile des Kupplungsaktuators dazu führen, dass insgesamt ein undefinierter Zustand vorhanden ist.

Der undefinierte Zustand des Kupplungsaktuators ist beispielsweise ein Fehlerfall, insbesondere ein Ausfall des Elektromotors. Es können aber auch andere Fehlerfälle zu einem undefinierten Zustand des Kupplungsaktuators führen.

Vorteilhafterweise wird im undefinierten Zustand der Geberzylinder von der hydraulischen Strecke abgeklemmt und stattdessen der hydraulische Speicher angebunden. Wie beschrieben wird dadurch ein definierter Zustand in der Kupplung hergestellt.

Vorzugsweise kann die Steuerungseinrichtung den Zustand des Elektromotors des Kupplungsaktuators abfragen und in Abhängigkeit des Abfrageergebnisses ein Ventil ansteuern, das in den hydraulischen Streckenabschnitt integriert ist. Über das Ventil kann dann der Geberzylinder abgeklemmt und der hydraulische Speicher angeklemmt werden.

Daneben betrifft die Erfindung ein Kraftfahrzeug mit einer Betätigungsanordnung. Das Kraftfahrzeug zeichnet sich dadurch aus, dass die Betätigungsanordnung wie beschrieben ausgebildet ist.

Weiterhin kann das Kraftfahrzeug eine Steuerungseinrichtung aufweisen, die zur Durchführung des beschriebenen Verfahrens ausgebildet ist.

Weitere Vorteile, Merkmale und Einzelheiten der Erfindung ergeben sich aus der folgenden Beschreibung von Ausführungsbeispielen und Figuren. Dabei zeigen:
- Figur 1: ein Kraftfahrzeug, und
- Figur 2: einen hydraulischen Schaltplan.

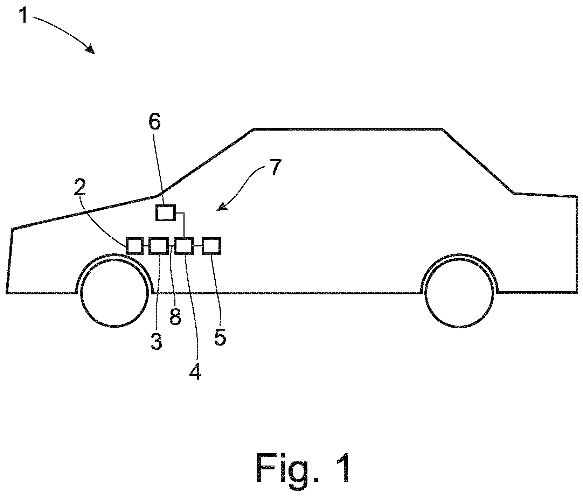

Figur 1 zeigt ein Kraftfahrzeug 1 mit einer Antriebseinheit 2, einer Kupplung 3, einem Kupplungsaktuator 4 und einem Getriebe 5. Der Kupplungsaktuator 4 ist dabei zum Betätigen der Kupplung 3 vorgesehen, über die die Antriebseinheit 2 mit dem Getriebe 5 verbunden ist.

Weiterhin weist das Kraftfahrzeug 1 eine Steuerungseinrichtung 6 auf, die unter anderem mit dem Kupplungsaktuator 4 verbunden ist.

Die Steuerungseinrichtung 6 und der Kupplungsaktuator 4 sind dabei Teil einer Betätigungsanordnung 7 zum Betätigen der Kupplung 3. Neben dem Kupplungsaktuator 4 weist die Betätigungsanordnung 7 auch noch einen hydraulischen Streckenabschnitt 8 auf.

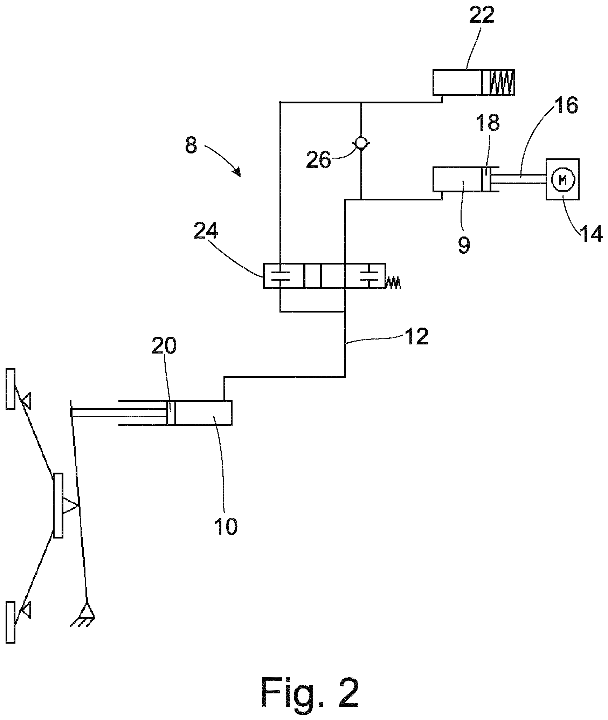

Der hydraulische Streckenabschnitt 8 ist in Figur 2 detailliert dargestellt. Figur 2 zeigt den hydraulischen Streckenabschnitt 8 mit einem Geberzylinder 9, einem Nehmerzylinder 10 und einer dazwischen liegenden Wegstrecke 12. Der Geberzylinder 9 kann dabei teilweise oder ganz in den Kupplungsaktuator 4 integriert sein, von dem lediglich der Elektromotor 14 dargestellt ist. Der Elektromotor 14 wirkt auf den Geberzylinder 9 zur Betätigung der Kupplung 3 ein, wobei zwischen dem Elektromotor 14 und dem Geberzylinder 9 ein Aktuatorgetriebe 16 angeordnet ist. In der aller einfachsten Ausgestaltung übersetzt das Getriebe lediglich die Drehbewegung des Elektromotors in einer Axialbewegung des Kolbens 18 des Geberzylinders 9. Über die Wegstrecke 12 wird dann die Axialbewegung des Kolbens 18 auf einen Kolben 20 im Nehmerzylinder 10 übertragen, über den dann eine Ausrückung oder Einrückung der Kupplung stattfinden kann.

Um den Kupplungsaktuator 4 vereinfacht aufbauen zu können ist an den hydraulischen Streckenabschnitt 8 ein hydraulischer Speicher 22 angebunden. Dabei ist der hydraulische Speicher im Regelfall von der hydraulischen Wegstrecke 8 abgeklemmt. Lediglich im Fehlerfall, beispielsweise bei Ausfall des Elektromotors 14, wird das Ventil 24 so gestellt, dass der Geberzylinder 9 abgeklemmt wird und der hydraulische Speicher 24 über die Wegstrecke 12 mit dem Nehmerzylinder 9 verbunden wird. Im Ausführungsbeispiel nach Figur 2 ist die Kupplung eine "normally closed"-Kupplung. Der Speicher hat also einen höheren Druck als die hydraulische Wegstrecke 8, sodass bei Anbindung des hydraulischen Speichers 24 an die hydraulische Wegstrecke 8 der Kolben 20 des Nehmerzylinders 10 in Richtung Ausrücken bewegt wird. Bei Ausfall des Elektromotors 14 wird also die Kupplung 3 geöffnet.

Bei diesem Aufbau der Betätigungsanordnung 8 kann der Kupplungsaktuator 4 extrem einfach aufgebaut sein, da er keinerlei Mechanik für einen Fehlerfall vorhält.

Parallel zu dem Ventil 24 ist vorteilhafterweise ein Ventil 26 geschaltet. Dieses befindet sich näher am Geberzylinder 9 und dem hydraulischen Speicher 22 als das Ventil 24. Das Ventil 26 kann als Rückschlagventil ausgebildet sein, das einen Fluidstrom zum Speicher 22 hin erlaubt. Mit dem Ventil 26, dessen Lage und Ausgestaltung unabhängig von den anderen Merkmalen des Kupplungsaktuators 4 und dem hydraulischen Streckenabschnitt 8 ist, wird ein Wiederbefüllen des Speichers 22 im Betrieb möglich.

### Bezugszeichen

- 1: Kraftfahrzeug
- 2: Antriebsvorrichtung
- 3: Kupplung
- 4: Kupplungsaktuator
- 5: Getriebe
- 6: Steuerungseinrichtung
- 7: Betätigungsanordnung
- 8: hydraulischer Streckenabschnitt
- 9: Geberzylinder
- 10: Nehmerzylinder
- 12: Wegstrecke
- 14: Elektromotor
- 16: Aktuatorgetriebe
- 18: Kolben
- 20: Kolben
- 22: hydraulischer Speicher
- 24: Ventil
- 26: Ventil

## Patentansprüche

1. Betätigungsanordnung (7) für eine Kraftfahrzeugkupplung (4) mit einer Steuerungseinrichtung (6), einem Kupplungsaktuator (4) und einem hydraulischen Streckenabschnitt (8), wobei der Kupplungsaktuator (4) zum Betätigen der Kupplung (3) auf den hydraulischen Streckenabschnitt (8) wirkt, **dadurch gekennzeichnet, dass** der hydraulische Streckenabschnitt (8) mit wenigstens einem hydraulischen Speicher (22) verbunden ist.

2. Betätigungsanordnung nach Anspruch 1, **dadurch gekennzeichnet, dass** der Kupplungsaktuator (4) keine Kompensationsfeder aufweist.

3. Betätigungsanordnung nach Anspruch 1 oder 2, **dadurch gekennzeichnet, dass** der hydraulische Speicher (3) einen höheren Druck aufweist als der hydraulische Streckenabschnitt (8).

4. Betätigungsanordnung nach Anspruch 1 oder 2, **dadurch gekennzeichnet, dass** der hydraulische Speicher (3) einen niedrigeren Druck aufweist als der hydraulische Streckenabschnitt (8).

5. Betätigungsanordnung nach Anspruch 1 oder 2, **dadurch gekennzeichnet, dass** zwei hydraulische Speicher (22) vorhanden sind, wobei einer einen niedrigeren Druck und der zweite hydraulische Speicher einen höheren Druck aufweist als der hydraulische Streckenabschnitt (8).

6. Betätigungsanordnung nach einem der vorangehenden Ansprüche, **dadurch gekennzeichnet, dass** der hydraulische Streckenabschnitt (8) einen Geberzylinder (9) und einen Nehmerzylinder (10) aufweist und der wenigstens eine hydraulische Speicher (22) zwischen Geberzylinder (9) und Nehmerzylinder (10) an den hydraulische Streckenabschnitt (8) angebunden ist.

7. Betätigungsanordnung nach einem der vorangehenden Ansprüche, **dadurch gekennzeichnet, dass** der wenigstens eine hydraulische Speicher (22) über ein Ventil (24) an den hydraulische Streckenabschnitt (8) angebunden ist.

8. Betätigungsanordnung nach einem der vorangehenden Ansprüche, **dadurch gekennzeichnet, dass** das Ventil (24) in einem ersten Betriebszustand den hydraulischen Speicher (22) vom hydraulischen Streckenabschnitt (8) trennt und in einem zweiten Betriebsabschnitt den Geberzylinder (9).

9. Betätigungsanordnung nach einem der vorangehenden Ansprüche, **dadurch gekennzeichnet, dass** der Kupplungsaktuator (4) einen Spindeltrieb umfasst.

10. Betätigungsanordnung nach einem der vorangehenden Ansprüche, **dadurch gekennzeichnet, dass** der Kupplungsaktuator (4) selbsthemmend ausgebildet ist.

11. Verfahren zum Betrieb einer Betätigungsanordnung nach einem der vorangehenden Ansprüche, **dadurch gekennzeichnet, dass** der hydraulische Streckenabschnitt (8) bei Vorliegen eines undefinierten Zustands des Kupplungsaktuators (4) mit einem hydraulischen Speicher (22) verbunden wird.

12. Verfahren nach Anspruch 11, **dadurch gekennzeichnet, dass** der undefinierte Zustand des Kupplungsaktuators (4) ein Fehlerfall, insbesondere ein Ausfall des Elektromotors (14), ist.

13. Verfahren nach einem der Ansprüche 11 oder 12, **dadurch gekennzeichnet, dass** im undefinierten Zustand der Gebezylinder (9) vom hydraulischen Streckenabschnitt (8) abgesperrt wird und stattdessen der hydraulische Speicher (22) angebunden wird.

14. Verfahren nach einem der Ansprüche 11 bis 13, **dadurch gekennzeichnet, dass** die Steuerungseinrichtung (7) den Zustand des Elektromotors (14) des Kupplungsaktuators (4) abfragt und in Abhängigkeit des Abfrageergebnisses ein Ventil (24) ansteuert, das in den hydraulischen Streckenabschnitt (8) integriert ist.

15. Kraftfahrzeug (1) mit einer Betätigungsanordnung (8), **dadurch gekennzeichnet, dass** die Betätigungsanordnung (8) nach einem der vorangehenden Ansprüche ausgebildet ist.
